# EUROPEAN PATENT APPLICATION

(11) **EP 3 372 474 A2**
(43) Date of publication of application: **12.09.2018**
(21) Application number: 18159526.5
(22) Date of filing: 01.03.2018
(51) Int. Cl.: B62D 1/16, B62D 1/20

(54) **SHAFT**

(30) Priority: 07.03.2017 JP 2017042959
(71) Applicant: JTEKT CORPORATION, Osaka 542-8502 (JP)
(72) Inventor: KOYAMA, Takeshi, Osaka-shi, Osaka 542-8502 (JP)
(74) Representative: Winter, Brandl, Fürniss, Hübner, Röss, Kaiser, Polte - Partnerschaft mbB

(57) **Abstract**

A shaft (3) has a central axis (L3) and includes first and second members (11, 12) that are identical in shape and that form a shaft portion for providing one end of the shaft (3) in an axial direction that the central axis extends in. Each of the first and second members (11, 12) includes a plate (111, 121) and an arm portion (112, 122). The plates (111, 121) extend in the axial direction. The arm portions (112, 122) are located closer to the end of the shaft (3) than the plates (111, 121) and are located farther from the central axis (L3) than the plates (111, 121). The plates (111, 121) face each other across the central axis (L3). The arm portions (112, 122) are couplable with a joint spider.

## Description

### BACKGROUND OF THE INVENTION

### 1. Field of the Invention

The invention relates to shafts, in particular, a shaft used for vehicle steering systems.

### 2. Description of Related Art

Some types of steering systems for vehicles, such as automobiles, use an intermediate shaft. One end of the intermediate shaft is coupled to a lower end of a steering shaft, and the other end of the intermediate shaft is coupled to an upper end of a pinion shaft. The upper end of the steering shaft is coupled to a steering wheel. The intermediate shaft transmits rotation of the steering wheel to the pinion shaft.

The intermediate shaft and the steering shaft are coupled by a universal joint. The intermediate shaft and the pinion shaft are also coupled by a universal joint. Such a universal joint includes a joint spider and two universal joint yokes. One of the two universal joint yokes is coupled to an end of a shaft sleeve of the intermediate shaft.

German patent application Publication No. 102005001082 discloses a universal joint yoke attachable to a shaft sleeve of an intermediate shaft.

Shaft sleeves and universal joint yokes are specialized parts and have different shapes for different vehicle models. As the variety of vehicle models increases, the variety of parts necessary to manufacture intermediate shafts increases. This requires complicated parts management. Assembling an intermediate shaft having a universal joint yoke requires an assembly device that is specialized according to the vehicle model. Thus, manufacturing an intermediate shaft that is specialized according to a particular vehicle model causes an increase in manufacturing cost.

### SUMMARY OF THE INVENTION

A purpose of the invention is to provide a shaft for reducing manufacturing cost.

An aspect of the invention provides a shaft having a central axis of rotation. The shaft includes a first member and a second member. The first and second members are identical in shape and form a shaft portion for providing one end of the shaft in an axial direction that the central axis extends in. The first member includes a first plate, a first arm portion, and a first connecting portion. The first plate extends in the axial direction. The first arm portion is located closer to the end of the shaft than the first plate, extends in the axial direction, and is located farther from the central axis than the first plate. The first connecting portion connects the first plate and the first arm portion. The second member includes a second plate, a second arm portion, and a second connecting portion. The second plate extends in the axial direction. The second arm portion is located closer to the end of the shaft than the second plate, extends in the axial direction, and is located farther from the central axis than the second plate. The second connecting portion connects the second plate and the second arm portion. The first plate and the second plate face each other across the central axis. The first arm portion and the second arm portion are couplable with a joint spider.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating a steering system that uses an intermediate shaft according to a first embodiment of the invention;
FIG. 2 is a perspective view of the intermediate shaft illustrated in FIG. 1;
FIG. 3 is an exploded perspective view of the intermediate shaft illustrated in FIG. 2;
FIG. 4 is a perspective view of an intermediate shaft according to a second embodiment of the invention;
FIG. 5 is a perspective view of a first member illustrated in FIG. 4;
FIG. 6 is a diagram illustrating the intermediate shaft of FIG. 4 that is viewed from a second end of the intermediate shaft in an axial direction toward a first end of the intermediate shaft in the axial direction;
FIG. 7 is a perspective view of an intermediate shaft according to a third embodiment of the invention;
FIG. 8 is a perspective view of a first member illustrated in FIG. 7;
FIG. 9 is a diagram illustrating how an upper shaft portion and a coupling shaft illustrated in FIG. 7 are coupled together;
FIG. 10 is an exploded perspective view of a lower shaft portion of an intermediate shaft according to a first modification of the first embodiment of the invention;
FIG. 11 is a diagram illustrating a reinforcing member used for the lower shaft portion of the intermediate shaft illustrated in FIG. 10;
FIG. 12 is a diagram illustrating a reinforcing member used for an intermediate shaft according to another modification of the first embodiment of the invention; and
FIG. 13 is a side view of an intermediate shaft according to still another modification of the first embodiment of the invention.

### DETAILED DESCRIPTION OF EMBODIMENTS

Below, embodiments of the invention are described in detail with reference to the drawings. The same or corresponding elements in the drawings are denoted by like numerals, and their descriptions will not be repeated. For the sake of brevity, the drawings may illustrate elements in simplified or schematic form, in whole or in part.

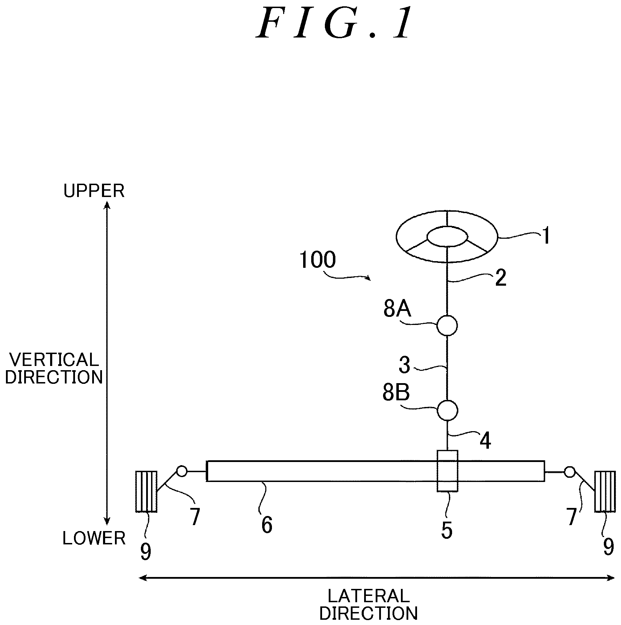

FIG. 1 is a schematic diagram illustrating a steering system 100 that uses an intermediate shaft 3 according to the embodiments of the invention. Referring to FIG. 1, the steering system 100 is mounted on a vehicle, such as an automobile. The steering system 100 includes a steering wheel 1, a steering shaft 2, the intermediate shaft 3, a pinion shaft 4, a pinion 5, a rack 6, tie rods 7, and joint spiders 8A and 8B.

A direction that the steering shaft 2 extends in is hereinafter referred to as a vertical direction. The vertical direction has an upper side (the upper side of FIG. 1) and a lower side (the lower side of FIG. 1). The steering wheel 1 is located on the upper side of the steering system 100 in the vertical direction. The pinion shaft 4 is located on the lower side of the steering system 100 in the vertical direction. A direction that the rack 6 extends in is hereinafter referred to as a lateral direction.

An upper end of the steering shaft 2 is coupled to the steering wheel 1. A lower end of the steering shaft 2 is coupled by the joint spider 8A to an upper end (a second end) of the intermediate shaft 3. A lower end (a first end) of the intermediate shaft 3 is coupled by the joint spider 8B to an upper end of the pinion shaft 4.

A lower end of the pinion shaft 4 is coupled to the pinion 5. An operation of the steering wheel 1 by a driver of the vehicle rotates the pinion 5. The rack 6 extends in a lateral direction of the vehicle.

The pinion 5 and the rack 6 work in conjunction with each other to convert rotary motion of the pinion shaft 4 to linear motion of the rack 6. Thus, rotation of the pinion shaft 4 moves the rack 6 in the lateral direction of the vehicle. The tie rods 7 push and pull steered wheels 9 of the vehicle in accordance with the lateral movement of the rack 6, thereby steering the vehicle.

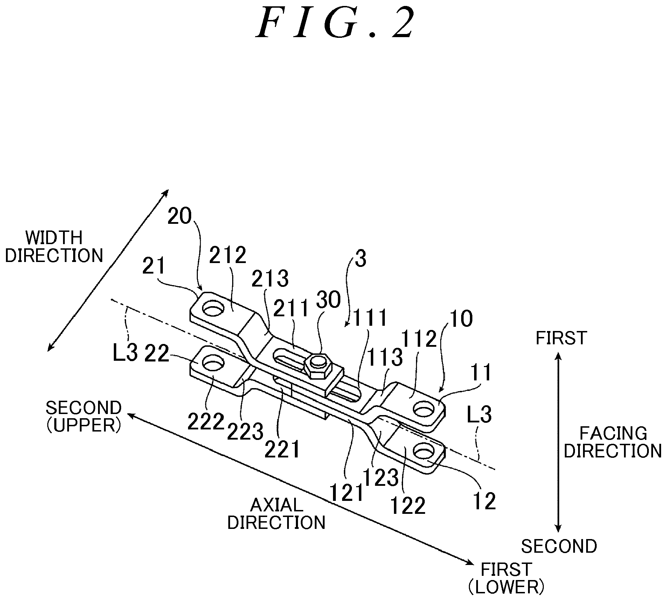

FIG. 2 is a perspective view of an intermediate shaft 3 according to a first embodiment of the invention. Referring to FIG. 2, the intermediate shaft 3 has a central axis L3 extending in an axial direction and rotates on the central axis L3. The intermediate shaft 3 has opposite first and second ends in the axial direction. The intermediate shaft 3 includes a lower shaft portion 10, an upper shaft portion 20, and a coupling member 30.

In order to describe the intermediate shaft 3 so that it is easily understood, the vertical direction shown in FIG. 1 is separately defined as the axial direction shown in FIG. 2. The intermediate shaft 3 extends in the axial direction. The axial direction has a first side and a second side. The lower shaft portion 10 is located on the first side in the axial direction while the upper shaft portion 20 is located on the second side in the axial direction. The first side in the axial direction corresponds to the lower right of FIG. 2 while the second side in the axial direction corresponds to the upper left of FIG. 2. The first side in the axial direction corresponds to the lower side in the vertical direction shown in FIG. 1 while the second end in the axial direction corresponds to the upper side in the vertical direction shown in FIG. 1.

The lower shaft portion 10 is located on a first side of the intermediate shaft 3. The upper shaft portion 20 is located on a second side of the intermediate shaft 3. A first end of the lower shaft portion 10 is coupled to the pinion shaft 4 by the joint spider 8B illustrated in FIG. 1. A second end of the lower shaft portion 10 is coupled to a first end of the upper shaft portion 20 by the coupling member 30. A second end of the upper shaft portion 20 is coupled to the steering shaft 2 by the joint spider 8A illustrated in FIG. 1.

Referring to FIG. 2, the lower shaft portion 10 includes a first member 11 and a second member 12. The first member 11 and the second member 12 face each other across the central axis L3.

A direction that the first member 11 and the second member 12 face each other in is hereinafter referred to as a facing direction. A direction perpendicular to both the axial direction and the facing direction is hereinafter referred to as a width direction. The facing direction has a first side and a second side. The first member 11 is located on the first side in the facing direction while the second member 12 is located on the second side in the facing direction.

The first member 11 includes a plate 111, an arm portion 112, and a connecting portion 113. The plate 111, the arm portion 112, and the connecting portion 113 are formed as one piece. The first member 11 is formed by forging, such as stamping, a plate of metal, such as aluminum alloy. Alternatively, the first member 11 may be made of carbon fiber, carbon-fiber-reinforced plastic (CFRP), or other suitable material.

The plate 111 is flat and extends in the axial direction. The arm portion 112 has a flat plate shape extending in the axial direction and is parallel to the plate 111. The arm portion 112 is located farther from the central axis L3 than the plate 111. The arm portion 112 is located closer to the first end of the intermediate shaft 3 than the plate 111. The connecting portion 113 connects the plate 111 and the arm portion 112.

The second member 12 is identical to the first member 11. Thus, the second member 12 is identical in shape to the first member 11.

The second member 12 includes a plate 121, an arm portion 122, and a connecting portion 123. The plate 121 of the second member 12 corresponds to the plate 111 of the first member 11. The arm portion 122 of the second member 12 corresponds to the arm portion 112 of the first member 11. The connecting portion 123 of the second member 12 corresponds to the connecting portion 113 of the first member 11.

The plate 121 is flat and extends in the axial direction. The arm portion 122 has a flat plate shape extending in the axial direction and is parallel to the plate 121. The arm portion 122 is located farther from the central axis L3 than the plate 121. The arm portion 122 is located closer to the first end of the intermediate shaft 3 than the plate 121. The connecting portion 123 connects the plate 121 and the arm portion 122.

The first member 11 and the second member 12 are located symmetrically with respect to a plane that includes the central axis L3 and that is perpendicular to the facing direction. The plate 111 of the first member 11 is in contact with the plate 121 of the second member 12.

The lower shaft portion 10 serves as a shaft sleeve of a lower shaft of the intermediate shaft 3 and also as a universal joint yoke of a universal joint. Specifically, the plate 111 of the first member 11 and the plate 121 of the second member 12 are the shaft sleeves of the lower shaft and is a base of the universal joint yoke. The arm portion 112 and the connecting portion 113 of the first member 11, and the arm portion 122 and the connecting portion 123 of the second member 12 correspond to a pair of arm portions extending from the base of the universal joint yoke toward the first side in the axial direction. The arm portion 112 of the first member 11 and the arm portion 122 of the second member 12 are coupled to the joint spider 8B (refer to FIG. 1) and are coupled to the upper end of the pinion shaft 4 via the joint spider 8B. Thus, the first member 11 and the second member 12 form a first shaft portion for providing the first end of the intermediate shaft 3 in the axial direction.

Referring to FIG. 2, the upper shaft portion 20 includes a third member 21 and a fourth member 22. The third member 21 and the fourth member 22 face each other across the central axis L3.

The third member 21 and the fourth member 22 are identical to the first member 11. Thus, the third member 21 and the fourth member 22 are identical in shape to the first member 11.

The third member 21 includes a plate 211, an arm portion 212, and a connecting portion 213. The plate 211 of the third member 21 corresponds to the plate 111 of the first member 11. The arm portion 212 of the third member 21 corresponds to the arm portion 112 of the first member 11. The connecting portion 213 of the third member 21 corresponds to the connecting portion 113 of the first member 11.

The plate 211 is flat and extends in the axial direction. The arm portion 212 has a flat plate shape extending in the axial direction and is parallel to the plate 211. The arm portion 212 is located farther from the central axis L3 than the plate 211. The arm portion 212 is located closer to the second end of the intermediate shaft 3 than the plate 211. The connecting portion 213 connects the plate 211 and the arm portion 212.

The fourth member 22 includes a plate 221, an arm portion 222, and a connecting portion 223. The plate 221 of the fourth member 22 corresponds to the plate 111 of the first member 11. The arm portion 222 of the fourth member 22 corresponds to the arm portion 112 of the first member 11. The connecting portion 223 of the fourth member 22 corresponds to the connecting portion 113 of the first member 11.

The plate 221 is flat and extends in the axial direction. The arm portion 222 has a flat plate shape extending in the axial direction and is parallel to the plate 221. The arm portion 222 is located farther from the central axis L3 than the plate 221. The arm portion 222 is located closer to the second end of the intermediate shaft 3 than the plate 121. The connecting portion 223 connects the plate 221 and the arm portion 222.

The third member 21 and the fourth member 22 sandwich the first member 11 and the second member 12 of the lower shaft portion 10 therebetween in the facing direction. The third member 21 and the fourth member 22 are located symmetrically with respect to the plane that includes the central axis L3 and that is perpendicular to the facing direction. The plate 211 of the third member 21 is in contact with the plate 111 of the first member 11, and the plate 221 of the fourth member 22 is in contact with the plate 121 of the second member 12.

The upper shaft portion 20 serves as a shaft sleeve of an upper shaft of the intermediate shaft 3 and also as a universal joint yoke of a universal joint. Specifically, the plate 211 of the third member 21 and the plate 221 of the fourth member 22 are the shaft sleeves of the intermediate shaft 3 and is a base of a universal joint yoke. The arm portion 212 and the connecting portion 213 of the third member 21, and the arm portion 222 and the connecting portion 223 of the fourth member 22 correspond to a pair of arm portions extending from the base of the universal joint yoke toward the second side in the axial direction. The arm portion 212 of the third member 21 and the arm portion 222 of the fourth member 22 are coupled to the joint spider 8A (refer to FIG. 1) and are coupled to the lower end of the steering shaft 2 via the joint spider 8A. Thus, the third member 21 and the fourth member 22 form a second shaft portion for providing the second end of the intermediate shaft 3 in the axial direction.

The plate 111 of the first member 11, the plate 121 of the second member 12, the plate 211 of the third member 21, and the plate 221 of the fourth member 22 all partially overlap each other in the facing direction. As described in detail later, the lower shaft portion 10 and the upper shaft portion 20 are coupled together by the coupling member 30 that is inserted through a hole formed in the portions of the plates 111, 121, 211, and 221 that overlap in the facing direction.

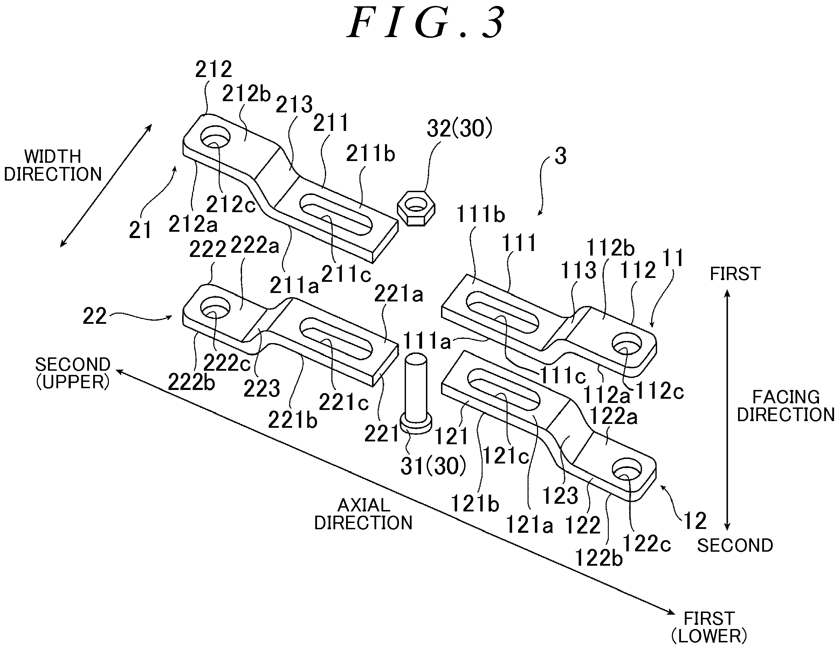

FIG. 3 is an exploded perspective view of the intermediate shaft 3 illustrated in FIG. 2. The structure of the first member 11 is described in more detail with reference to FIG. 3.

The plate 111 of the first member 11 has an inner surface 111a, an outer surface 111b, and a coupling hole 111c.

The inner surface 111a and the outer surface 111b extend in the axial direction and are flat surfaces perpendicular to the facing direction. The inner surface 111a faces the second member 12. The outer surface 111b is located opposite the inner surface 111a in the facing direction. The coupling hole 111c is a hole elongated in the axial direction and penetrates the plate 111 in the facing direction. Thus, the coupling hole 111c extends through the plate 111 from the inner surface 111a to the outer surface 111b.

The arm portion 112 has an inner surface 112a, an outer surface 112b, and a through hole 112c.

The inner surface 112a and the outer surface 112b extend in the axial direction and are flat surfaces perpendicular to the facing direction. The inner surface 112a faces the second member 12. The outer surface 112b is located opposite the inner surface 112a in the facing direction. The through hole 112c is a circular hole and penetrates the arm portion 112 in the facing direction. Thus, the through hole 112c extends through the arm portion 112 from the inner surface 112a to the outer surface 112b.

The connecting portion 113 connects the plate 111 and the arm portion 112. A second end of the connecting portion 113 in the axial direction is connected to a first end of the plate 111 in the axial direction. A first end of the connecting portion 113 in the axial direction is connected to a second end of the arm portion 112 in the axial direction. The distance between the connecting portion 113 and the central axis L3 increases from the second side to the first side in the axial direction.

The structure of the second member 12 is described in more detail with reference to FIG. 3. The plate 121 of the second member 12 has an inner surface 121a, an outer surface 121b, and a coupling hole 121c.

The inner surface 121a and the outer surface 121b extend in the axial direction and are flat surfaces perpendicular to the facing direction. The inner surface 121 a faces the inner surface 111a of the plate 111 of the first member 11. The outer surface 121b is located opposite the inner surface 121a in the facing direction. The coupling hole 121c is a hole elongated in the axial direction and penetrates the plate 121 in the facing direction. Thus, the coupling hole 121c extends through the plate 121 from the inner surface 121a to the outer surface 121b.

The arm portion 122 has an inner surface 122a, an outer surface 122b, and a through hole 122c.

The inner surface 122a and the outer surface 122b extend in the axial direction and are flat surfaces perpendicular to the facing direction. The inner surface 122a faces the inner surface 112a of the arm portion 112 of the first member 11. The outer surface 122b is located opposite the inner surface 122a in the facing direction. The through hole 122c is a circular hole and penetrates the arm portion 122 in the facing direction. Thus, the through hole 122c extends through the arm portion 122 from the inner surface 122a to the outer surface 122b.

The connecting portion 123 connects the plate 121 and the arm portion 122. A second end of the connecting portion 123 in the axial direction is connected to a first end of the plate 121 in the axial direction. A first end of the connecting portion 123 in the axial direction is connected to a second end of the arm portion 122 in the axial direction. The distance between the connecting portion 123 and the central axis L3 increases from the second side to the first side in the axial direction.

The structure of the third member 21 is described in more detail with reference to FIG. 3. The plate 211 of the third member 21 has an inner surface 211 a, an outer surface 211b, and a coupling hole 211c.

The inner surface 211a and the outer surface 211b extend in the axial direction and are flat surfaces perpendicular to the facing direction. The inner surface 211a faces the fourth member 22. The outer surface 211b is located opposite the inner surface 211a in the facing direction. The coupling hole 211c is a hole elongated in the axial direction and penetrates the plate 211 in the facing direction. Thus, the coupling hole 211c extends through the plate 211 from the inner surface 211 a to the outer surface 211b.

The arm portion 212 has an inner surface 212a, an outer surface 212b, and a through hole 212c.

The inner surface 212a and the outer surface 212b extend in the axial direction and are flat surfaces perpendicular to the facing direction. The inner surface 212a faces the fourth member 22. The outer surface 212b is located opposite the inner surface 212a in the facing direction. The through hole 212c is a circular hole and penetrates the arm portion 212 in the facing direction. Thus, the through hole 212c extends through the arm portion 212 from the inner surface 212a to the outer surface 212b.

The connecting portion 213 connects the plate 211 and the arm portion 212. A first end of the connecting portion 213 in the axial direction is connected to a second end of the plate 211 in the axial direction. A second end of the connecting portion 213 in the axial direction is connected to a first end of the arm portion 212 in the axial direction. The distance between the connecting portion 213 and the central axis L3 increases from the first side to the second side in the axial direction.

The structure of the fourth member 22 is described in more detail with reference to FIG. 3. The plate 221 of the fourth member 22 has an inner surface 221 a, an outer surface 221b, and a coupling hole 221c.

The inner surface 221a and the outer surface 221b extend in the axial direction and are flat surfaces perpendicular to the facing direction. The inner surface 221a faces the inner surface 211a of the plate 211 of the third member 21. The outer surface 221b is located opposite the inner surface 221a in the facing direction. The coupling hole 221c is a hole elongated in the axial direction and penetrates the plate 221 in the facing direction. Thus, the coupling hole 221c extends through the plate 221 from the inner surface 221a to the outer surface 221b.

The arm portion 222 has an inner surface 222a, an outer surface 222b, and a through hole 222c.

The inner surface 222a and the outer surface 222b extend in the axial direction and are flat surfaces perpendicular to the facing direction. The inner surface 222a faces the inner surface 212a of the arm portion 212 of the third member 21. The outer surface 222b is located opposite the inner surface 222a in the facing direction. The through hole 222c is a circular hole and penetrates the arm portion 222 in the facing direction. Thus, the through hole 222c extends through the arm portion 222 from the inner surface 222a to the outer surface 222b.

The connecting portion 223 connects the plate 221 and the arm portion 222. A first end of the connecting portion 223 in the axial direction is connected to a second end of the plate 221 in the axial direction. A second end of the connecting portion 223 in the axial direction is connected to a first end of the arm portion 222 in the axial direction. The distance between the connecting portion 223 and the central axis L3 increases from the first side to the second side in the axial direction.

Referring to FIG. 3, the coupling member 30 includes a bolt 31 and a nut 32. The bolt 31 is inserted through the coupling hole 111c in the plate 111 of the first member 11, the coupling hole 121c in the plate 121 of the second member 12, the coupling hole 211c in the plate 211 of the third member 21, and the coupling hole 221c in the plate 221 of the fourth member 22. The nut 32 is threaded onto the tip of the bolt 31 that is inserted through the coupling holes 111c, 121c, 211 c, and 221c.

Next, the positional relationships among the first member 11, the second member 12, the third member 21, and the fourth member 22 of the intermediate shaft 3 are described with reference to FIG. 3.

First, the arrangement of the first member 11 and the second member 12 of the lower shaft portion 10 is described. The first member 11 and the second member 12 are located symmetrically with respect to the plane that includes the central axis L3 and that is perpendicular to the facing direction. The first member 11 coincides with the second member 12 in the width direction. The inner surface 111a of the plate 111 of the first member 11 is in contact with the inner surface 121 a of the plate 121 of the second member 12.

Thus, the inner surfaces 111a and 121a lie on the plane that includes the central axis L3 and that is perpendicular to the facing direction. The coupling hole 111c in the plate 111 of the first member 11 and the coupling hole 121c in the plate 121 of the second member 12 coincide with each other in the facing direction. As such, the coupling holes 111c and 121c form a single continuous hole that extends in the facing direction and that has a single tubular surface.

Next, the arrangement of the third member 21 and the fourth member 22 of the upper shaft portion 20 is described.

The third member 21 and the fourth member 22 are located symmetrically with respect to the plane that includes the central axis L3 and that is perpendicular to the facing direction. The third member 21 and the fourth member 22 coincide with the first member 11 and the second member 12 in the width direction.

The inner surface 211 a of the plate 211 of the third member 21 is partially in contact with the outer surface 111b of the plate 111 of the first member 11. Specifically, the plate 211 of the third member 21 and the plate 111 of the first member 11 are displaced from each other in the axial direction such that the coupling hole 211c in the plate 211 of the third member 21 and the coupling hole 111c in the plate 111 of the first member 11 form a continuous hole, but the coupling holes 211c and 111c do not coincide with each other in the facing direction.

The inner surface 221a of the plate 221 of the fourth member 22 is partially in contact with the outer surface 121b of the plate 121 of the second member 12. Specifically, the plate 221 of the fourth member 22 and the plate 121 of the second member 12 are displaced from each other in the axial direction such that the coupling hole 221c in the plate 221 of the fourth member 22 and the coupling hole 121c in the plate 121 of the second member 12 form a continuous hole, but the coupling holes 221c and 121c do not coincide with each other in the facing direction.

Such an arrangement of the third member 21 and the fourth member 22 causes the plate 111 of the first member 11, the plate 121 of the second member 12, the plate 211 of the third member 21, and the plate 221 of the fourth member 22 to partially overlap each other in the facing direction. The third member 21 and the fourth member 22 sandwich the plate 111 of the first member 11 and the plate 121 of the second member 12 therebetween in the facing direction. The coupling hole 211c in the plate 211 of the third member 21 and the coupling hole 221c in the plate 221 of the fourth member 22 coincide with each other in the facing direction. The coupling holes 111c, 121c, 211 c, and 221c are connected together in the facing direction to form a continuous hole.

The bolt 31 of the coupling member 30 is inserted through the hole that is formed by the connected coupling holes 111c, 121c, 211c, and 222c. The bolt 31 is inserted from the second side in the facing direction. The nut 32 is threaded onto the tip of the bolt 31 that protrudes from the plate 211 of the third member 21 toward the first side in the facing direction.

An external thread formed on the outer circumferential surface of the bolt 31 mates with an internal thread formed on the inner circumferential surface of the nut 32 so that the nut 32 fastens the plates 111, 121, 211, and 221 together. Thus, a shank of the bolt 31 is inserted in the hole that is formed by the connected coupling holes 111c, 121 c, 211c, and 221c, the nut 32 is fixed to the plate 211 of the third member 21, and a head of the bolt 31 is fixed to the plate 221 of the fourth member 22. As such, the lower shaft portion 10 that is formed by the first member 11 and the second member 12 is coupled to the upper shaft portion 20 that is formed by the third member 21 and the fourth member 22.

As described above, the intermediate shaft 3 is formed by the first member 11, the second member 12, the third member 21, and the fourth member 22 that are all identical in shape. The first member 11, the second member 12, the third member 21, and the fourth member 22 are coupled together by a common coupling member, namely, the bolt 31 and the nut 32. This eliminates the need to manufacture an upper shaft and a lower shaft of the intermediate shaft 3 individually according to vehicle type. The length of the intermediate shaft 3 in the axial direction is adjustable by adjusting the length (the length in the axial direction) over which the first member 11 and the second member 12 overlap the upper shaft portion 20. This facilitates adjusting the length of the intermediate shaft 3 in the axial direction according to vehicle model. Thus, the variety of parts of the intermediate shaft 3 is significantly reduced, and the manufacturing cost of the intermediate shaft 3 is reduced accordingly.

The first member 11, the second member 12, the third member 21, and the fourth member 22 are coupled together by the bolt 31 and the nut 32. Adjusting the fastening force of the bolt 31 and the nut 32 sets a force that allows the plate 111 of the first member 11 and the plate 121 of the second member 12 to move relative to the plate 211 of the third member 21 and the plate 221 of the fourth member 22. Specifically, adjusting the strength by which the head of the bolt 31 is fixed to the fourth member 22 and the strength by which the nut 32 is fixed to the third member 21 (i.e., adjusting friction coefficients and the force by which the first member 11, the second member 12, the third member 21, and the fourth member 22 are fastened together) adjusts the amounts of impact, load, and energy absorbed by the intermediate shaft 3 in the event of a vehicle collision. Thus, such amounts absorbed by the intermediate shaft 3 are easily adjustable.

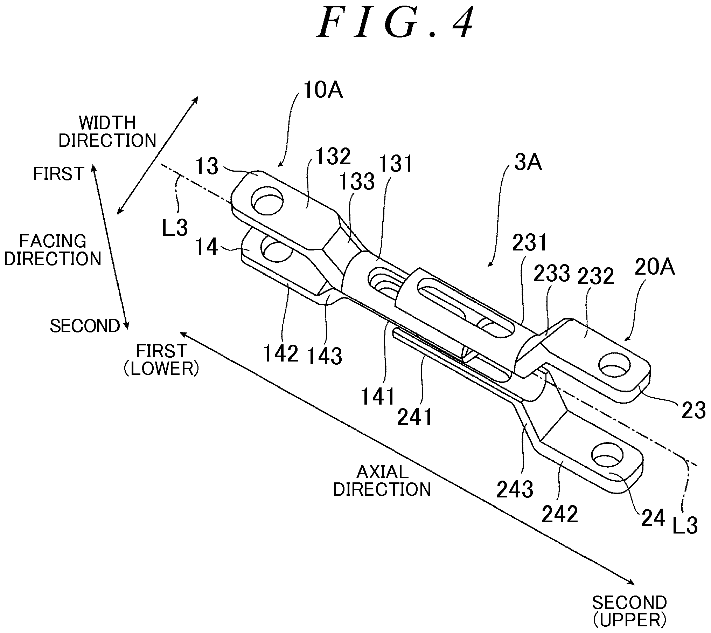

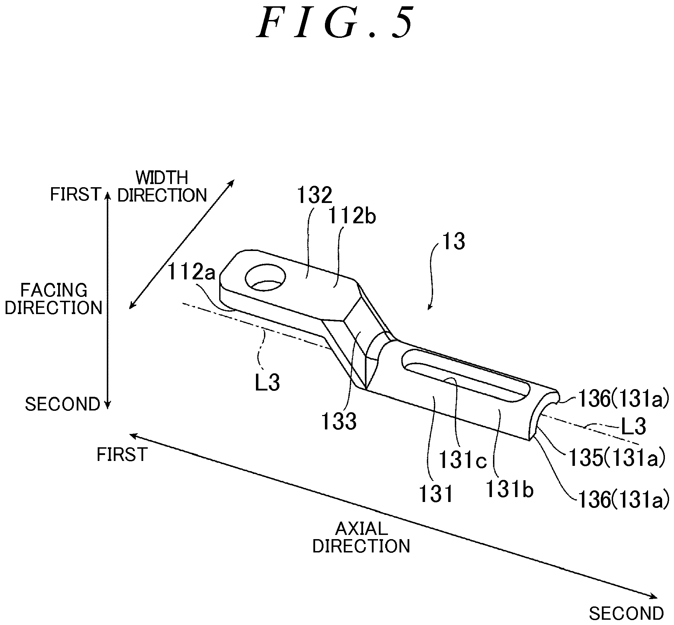

FIG. 4 is a perspective view of an intermediate shaft 3A according to a second embodiment of the invention. FIG. 5 is an enlarged perspective view of a first member 13 illustrated in FIG. 4.

Referring to FIG. 4, the intermediate shaft 3A includes a lower shaft portion 10A and an upper shaft portion 20A. The intermediate shaft 3A rotates on a central axis L3.

The lower shaft portion 10A includes the first member 13 and a second member 14. The upper shaft portion 20A includes a third member 23 and a fourth member 24. The first member 13, the second member 14, the third member 23, and the fourth member 24 are all identical to each other and thus are identical in shape. Therefore, the shape of the first member 13 is described in detail while the second member 14, the third member 23, and the fourth member 24 are described briefly.

FIG. 4 omits the illustration of a coupling member 30 that couples together the first member 13, the second member 14, the third member 23, and the fourth member 24.

Referring to FIG. 4, a direction that the central axis L3 extends in is hereinafter referred to as an axial direction. The axial direction has a first side and a second side. The lower shaft portion 10A is located on the first side in the axial direction while the upper shaft portion 20A is located on the second side in the axial direction.

A direction that an arm portion 132 of the first member 13 and an arm portion 142 of the second member 14 face each other in is hereinafter referred to as a facing direction. The facing direction is perpendicular to the direction that the central axis L3 extends in. The facing direction has a first side and a second side. The arm portion 132 of the first member 13 is located on the first side in the facing direction while the arm portion 142 of the second member 14 is located on the second side in the facing direction.

A direction perpendicular to both the axial direction and the facing direction shown in FIG. 4 is hereinafter referred to as a width direction.

The first member 13 corresponds to the first member 11 illustrated in FIG. 2. The second member 14 corresponds to the second member 12 illustrated in FIG. 2. The third member 23 corresponds to the third member 21 illustrated in FIG. 2. The fourth member 24 corresponds to the fourth member 22 illustrated in FIG. 2.

The intermediate shaft 3A differs from the intermediate shaft 3 according to the first embodiment mainly in the following two aspects.

First, a plate 131 of the first member 13 illustrated in FIG. 4 differs in shape from the plate 111 of the first member 11 illustrated in FIG. 2. Specifically, as illustrated in FIG. 2, the inner surface 111a and the outer surface 111b of the plate 111 of the first member 11 are both flat. In contrast, as illustrated in FIG. 4, an inner surface and an outer surface of the plate 131 of the first member 13 of the intermediate shaft 3A are curved in an arc. The second member 14, the third member 23, and the fourth member 24 illustrated in FIG. 4 have the same characteristics as the first member 13.

Secondly, a phase angle between the lower shaft portion 10A and the upper shaft portion 20A of the intermediate shaft 3A illustrated in FIG. 4 is greater than zero degrees whereas a phase angle between the lower shaft portion 10 and the upper shaft portion 20 of the intermediate shaft 3 illustrated in FIG. 3 is zero degrees.

The second embodiment is described with a focus on the two differences.

Referring to FIG. 5, the first member 13 includes the plate 131, the arm portion 132, and a connecting portion 133. The plate 131 corresponds to the plate 111 of the first member 11. The arm portion 132 corresponds to the arm portion 112 of the first member 11. The connecting portion 133 corresponds to the connecting portion 113 of the first member 11.

The plate 131 has an inner surface 131a, an outer surface 131b, and a coupling hole 131 c.

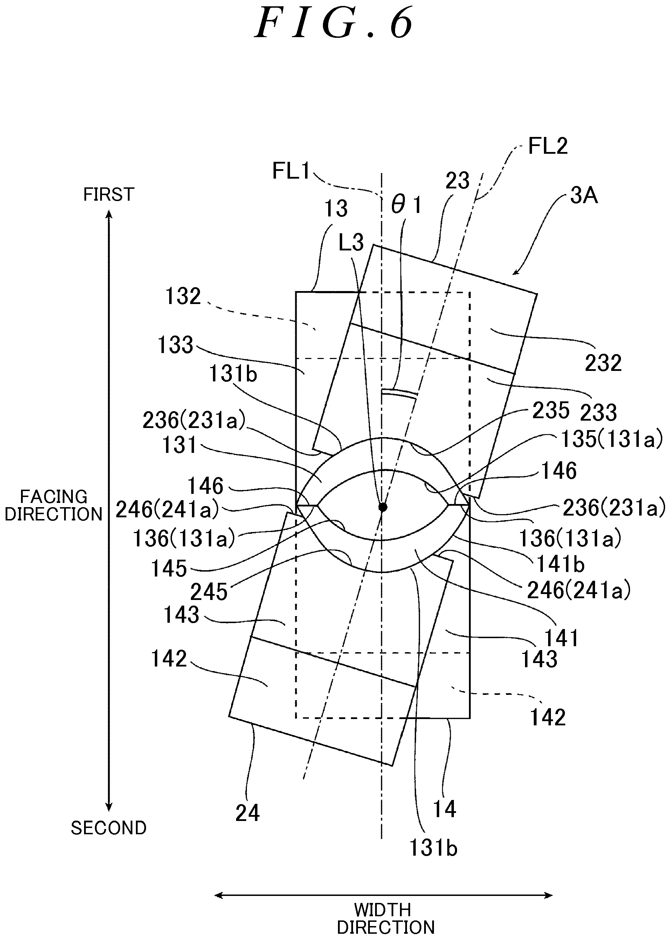

The inner surface 131a corresponds to the inner surface 111a of the plate 111 of the first member 11. As illustrated in FIG. 4, the inner surface 131a faces the second member 14. As illustrated in FIG. 6, the inner surface 131 a includes an inner curved surface 135 and inner contact surfaces 136. The inner curved surface 135 extends in the axial direction and is curved in an arc. When viewed in the axial direction, the inner curved surface 135 has a convex shape that projects in a direction away from the central axis L3. The inner contact surfaces 136 extend in the axial direction and are flat surfaces perpendicular to the facing direction. The inner curved surface 135 is located between the inner contact surfaces 136 in the width direction.

The outer surface 131b corresponds to the outer surface 111b of the plate 111 of the first member 11 and is located opposite the inner surface 131a in the facing direction. The outer surface 131b extends in the axial direction and is curved in an arc. When viewed in the axial direction, the outer surface 131b has a convex shape that projects in the direction away from the central axis L3.

The coupling hole 131c corresponds to the coupling hole 111c in the plate 111 of the first member 11. The coupling hole 131c is a hole elongated in the axial direction and penetrates the plate 131 in the facing direction. Thus, the coupling hole 131c extends through the plate 131 from the inner surface 131a to the outer surface 131b.

The arm portion 132 is located farther from the central axis L3 than the plate 131 and has the same structure as the arm portion 112 of the first member 11. Therefore, the arm portion 132 is not described in detail here. The connecting portion 133 connects the plate 131 and the arm portion 132.

Referring to FIG. 4, the second member 14 includes a plate 141, the arm portion 142, and a connecting portion 143. The third member 23 includes a plate 231, an arm portion 232, and a connecting portion 233. The fourth member 24 includes a plate 241, an arm portion 242, and a connecting portion 243. The second member 14, the third member 23, and the fourth member 24 are identical in shape to the first member 13. Therefore, the structures of the second member 14, the third member 23, and the fourth member 24 are not described in detail here.

Referring to FIG. 4, the positional relationships among the first member 13, the second member 14, the third member 23, and the fourth member 24 are described.

The positional relationships among the first member 13, the second member 14, the third member 23, and the fourth member 24 in the axial direction are the same as the positional relationships among the first member 11, the second member 12, the third member 21, and the fourth member 22 of the intermediate shaft 3 in the axial direction.

FIG. 6 is a diagram illustrating the intermediate shaft 3A of FIG. 4 that is viewed from a second end toward a first end of the intermediate shaft 3A in an axial direction. FIG. 6 omits the illustration of the coupling member 30.

Referring to FIG. 6, the inner contact surfaces 136 of the plate 131 of the first member 13 are in contact with inner contact surfaces 146 of the plate 141 of the second member 14. The inner curved surface 135 of the plate 131 of the first member 13 faces an inner curved surface 145 of the plate 141 of the second member 14.

An inner curved surface 235 of a plate 231 (refer to FIG. 4) of the third member 23 is in contact with the outer surface 131b of the plate 131 of the first member 13. An inner curved surface 245 of a plate 241 (refer to FIG. 4) of the fourth member 24 is in contact with an outer surface 141b of the plate 141 of the second member 14.

Referring to FIG. 4, the arm portion 132 of the first member 13 faces an arm portion 142 of the second member 14 in a direction different from the direction in which an arm portion 232 of the third member 23 faces an arm portion 242 of the fourth member 24. A straight line FL1 illustrated in FIG. 6 crosses the central axis L3 and extends in the direction in which the arm portion 132 of the first member 13 faces the arm portion 142 of the second member 14. A straight line FL2 illustrated in FIG. 6 crosses the central axis L3 and extends in the direction in which the arm portion 232 of the third member 23 faces the arm portion 242 of the fourth member 24. The straight line FL1 and the straight line FL2 cross each other at an angle of θ1 that is greater than zero degrees. Thus, the phase angle between the lower shaft portion 10A and the upper shaft portion 20A of the intermediate shaft 3A is set to θ1.

As described above, according to the second embodiment, the first member 13, the second member 14, the third member 23, and the fourth member 24 of the intermediate shaft 3A are all identical in shape, and the inner surface 131a and the outer surface 131b of the plate 131 of the first member 13 are curved in an arc and convexly project in the direction away from the central axis L3 when viewed in the axial direction. Thus, the number of parts of the intermediate shaft 3A is reduced, and the phase angle is adjusted to a degree greater than zero. As such, torque fluctuations caused during rotation of the intermediate shaft 3A is suppressed while the number of parts of the intermediate shaft 3A is reduced. This facilitates changing the phase angle of the intermediate shaft 3A according to vehicle model in the manufacture of the intermediate shaft 3A.

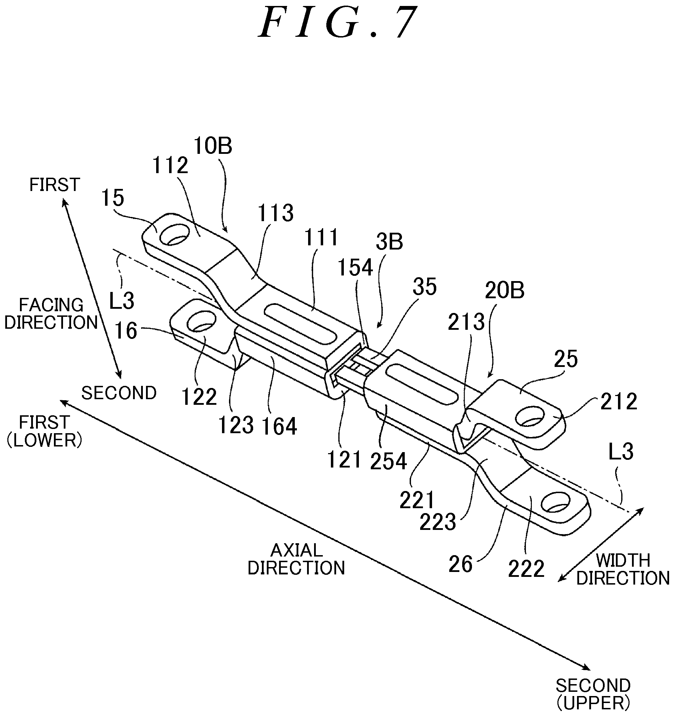

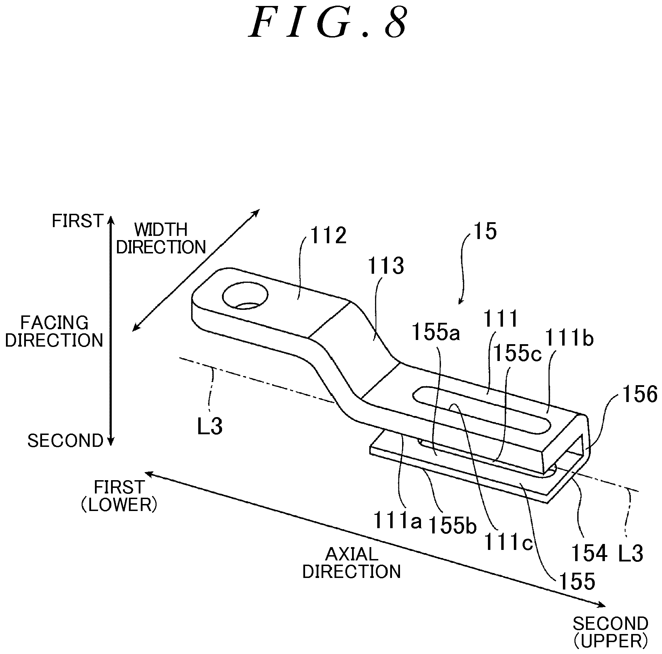

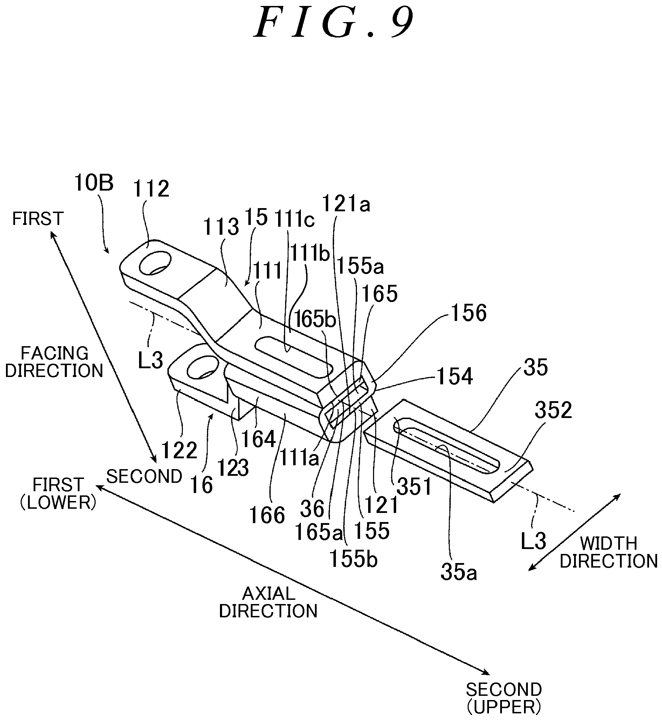

FIG. 7 is a perspective view of an intermediate shaft 3B according to a third embodiment of the invention. FIG. 8 is a perspective view of a first member 15 illustrated in in FIG. 7. FIG. 9 is a diagram illustrating how an upper shaft portion 20B and a coupling shaft 35 illustrated in FIG. 7 are coupled together.

Referring to FIG. 7, the intermediate shaft 3B includes a lower shaft portion 10B, the upper shaft portion 20B, and the coupling shaft 35. The lower shaft portion 10B provides a lower shaft of the intermediate shaft 3 while the upper shaft portion 20B provides an upper shaft of the intermediate shaft 3. FIG. 7 omits the illustration of coupling members 30 of the intermediate shaft 3B.

The lower shaft portion 10B includes a first member 15 and a second member 16. The upper shaft portion 20B includes a third member 25 and a fourth member 26. The first member 15, the second member 16, the third member 25, and the fourth member 26 are identical to each other and thus are identical in shape.

Referring to FIG. 7, a direction that a central axis L3 extends in is hereinafter referred to as an axial direction. The axial direction has a first side and a second side. The lower shaft portion 10B is located on the first side in the axial direction while the upper shaft portion 20B is located on the second side in the axial direction.

A direction that an arm portion 112 of the first member 15 and an arm portion 122 of the second member 16 face each other in is hereinafter referred to as a facing direction. The facing direction is perpendicular to the direction that the central axis L3 extends in. The facing direction has a first side and a second side. The arm portion 112 of the first member 15 is located on the first side in the facing direction while the arm portion 122 of the second member 16 is located on the second side in the facing direction.

A direction perpendicular to both the axial direction and the facing direction shown in FIG. 7 is hereinafter referred to as a width direction.

The intermediate shaft 3B differs from the intermediate shaft 3 according to the first embodiment mainly in the following two aspects.

First, the intermediate shaft 3B illustrated in FIG. 7 includes the first member 15 instead of the first member 11. The first member 15 includes a relative rotation limiting portion 154 in addition to a plate 111, the arm portion 112, and a connecting portion 113 that are the same as those of the first member 11.

Secondary, the intermediate shaft 3B illustrated in FIG. 7 includes the lower shaft portion 10B and the upper shaft portion 20B whereas the intermediate shaft 3 illustrated in FIG. 2 includes the lower shaft portion 10 and the upper shaft portion 20. The lower shaft portion 10B and the upper shaft portion 20B are coupled together by two coupling members 30 and the coupling shaft 35.

The third embodiment is described with a focus on the above differences.

Referring to FIG. 7, the lower shaft portion 10B is located on the first side of the intermediate shaft 3B in the axial direction while the upper shaft portion 20B is located on the second side of the intermediate shaft 3B in the axial direction.

Referring to FIG. 8, the first member 15 includes the plate 111, the arm portion 112, the connecting portion 113, and the relative rotation limiting portion 154. The relative rotation limiting portion 154 is located on the opposite side of the plate 111 from the arm portion 112 in the facing direction. The relative rotation limiting portion 154 includes a subplate 155 and a plate connecting portion 156.

The subplate 155 is located on the opposite side of the plate 111 from the arm portion 112 and is parallel to the plate 111. The subplate 155 has a facing surface 155a and a contact surface 155b. The facing surface 155a and the contact surface 155b are flat surfaces perpendicular to the facing direction. The facing surface 155a faces an inner surface 111a of the plate 111 and is spaced away from the inner surface 111a of the plate 111. The contact surface 155b is located opposite the facing surface 155a in the facing direction.

The subplate 155 further has a through hole 155c. The through hole 155c is a hole elongated in the axial direction and penetrates the subplate 155 in the facing direction. Thus, the through hole 155c extends through the subplate 155 from the facing surface 155a to the contact surface 155b. The through hole 155c coincides with the coupling hole 111c in the plate 111 in the facing direction.

The plate connecting portion 156 has a plate shape and extends in the facing direction. The plate connecting portion 156 connects a first end surface of the plate 111 in the width direction and a first end surface of the subplate 155 in the width direction.

Referring to FIG. 7, the second member 16 includes a plate 121, an arm portion 122, a connecting portion 123, and a relative rotation limiting portion 164. The third member 25 includes a plate 211 (not illustrated in FIG. 7), an arm portion 212, a connecting portion 213, and a relative rotation limiting portion 254. The fourth member 26 includes a plate 221, an arm portion 222, a connecting portion 223, and a relative rotation limiting portion (not illustrated in FIG. 7). The second member 16, the third member 25, and the fourth member 26 are identical in shape to the first member 15. Therefore, the structures of the second member 16, the third member 25, and the fourth member 26 are not described in detail here.

Referring to FIG. 9, the coupling shaft 35 has a flat plate shape and extends in the axial direction. The coupling shaft 35 has a through hole 35a. The through hole 35a is a hole elongated in the axial direction and penetrates the coupling shaft 35 in the facing direction.

Next, the lower shaft portion 10B is described with reference to FIG. 9.

The plate 111 of the first member 15 and the plate 121 of the second member 16 face each other across the central axis L3. A contact surface 165b of a subplate 165 of the second member 16 is in contact with the inner surface 111a of the plate 111 of the first member 15. The contact surface 155b of the subplate 155 of the first member 15 is in contact with an inner surface 121a of the plate 121 of the second member 16. The facing surface 155a of the subplate 155 of the first member 15 and a facing surface 165a of the subplate 165 of the second member 16 face each other across the central axis L3.

The first member 15 and the second member 16 are arranged such that the coupling hole 111c in the plate 111, the coupling hole 121c in the plate 121, the through hole 155c in the subplate 155, and a through hole in the subplate 165 coincide with each other in the facing direction. In FIG. 9, the through hole in the subplate 165 is hidden by the first member 15 and thus is not visible.

This forms an insertion space 36 that is enclosed by the subplates 155 and 165 and the plate connecting portions 156 and 166. The insertion space 36 is a space elongated in the axial direction and has a rectangular shape when viewed in the axial direction.

A first end 351 of the coupling shaft 35 in the axial direction is inserted in the insertion space 36. As long as the through hole 35a in the coupling shaft 35, the coupling hole 111c in the plate 111, the coupling hole 121c in the plate 121, the through hole 155c in the subplate 155, and the through hole in the subplate 165 are connected to form a single continuous hole, the length of the coupling shaft 35 from the first end 351 (in the axial direction) by which the coupling shaft 35 is inserted in the insertion space 36 is not limited to a specific length.

From the first side in the facing direction, a bolt 31 of one of the coupling members 30 (not illustrated in FIG. 9) is inserted through the hole that is formed by the coupling hole 111c in the plate 111, the coupling hole 121c in the plate 121, the through hole 155c in the subplate 155, the through hole in the subplate 165, and the through hole 35a in the coupling shaft 35. A nut 32 of one of the coupling members 30 is threaded onto a portion of the bolt 31 that protrudes from the plate 121 of the second member 16 toward the second side in the facing direction, thereby coupling together the first member 15, the second member 16, and the coupling shaft 35.

The third member 25 and the fourth member 26 are arranged such that the positional relationship between the third member 25 and the fourth member 26 is the same as the positional relationship between the first member 15 and the second member 16. With the coupling shaft 35 coupled to the first member 15 and the second member 16, a second end 352 of the coupling shaft 35 in the axial direction is inserted in an insertion space that is formed by the third member 25 and the fourth member 26. The third member 25, the fourth member 26, and the second end 352 of the coupling shaft 35 are coupled together by the other of the coupling members 30 that is different from the coupling member 30 used to couple together the first member 15, the second member 16, and the first end 351 of the coupling shaft 35. As such, the intermediate shaft 3B is formed.

The first member 15 and the second member 16 of the intermediate shaft 3B have the relative rotation limiting portions 154 and 164, respectively. This limits rotation of the first member 15 relative to the second member 16, thus improving the rotational rigidity of the intermediate shaft 3B.

A rotational force about the central axis L3 applied to the lower shaft portion 10B is applied separately to each of the plate 111 of the first member 15 and the plate 121 of the second member 16. If the force applied to the plate 111 of the first member 15 is greater than the force applied to the plate 121 of the second member 16, the amount of rotation of the plate 111 may become greater than the amount of rotation of the plate 121. As a result, the plate 111 may rotate relative to the plate 121.

In the intermediate shaft 3B, the subplate 155 of the first member 15 is in contact with the plate 121 of the second member 16, and the subplate 165 of the second member 16 is in contact with the plate 111 of the first member 15. This limits the rotation of the plate 111 relative to the plate 121. Thus, the rotational rigidity of the intermediate shaft 3B is improved.

Although the coupling shaft 35 according to the third embodiment has a plate shape, this is merely illustrative. In cases where both the first end 351 and the second end 352 of the coupling shaft 35 in the axial direction have a plate shape, the second end 352 may be angled relative to the first end 351 when viewed in the axial direction. This provides a phase angle between the lower shaft portion 10B and the upper shaft portion 20B. As in the previous embodiments, the amount of impact energy absorbed by the intermediate shaft 3B in the event of a vehicle collision is adjustable by adjusting the fastening force of the coupling member 30. The amount of impact energy absorbed by the intermediate shaft 3B may be adjusted by making a V-shaped or U-shaped cutout in the coupling shaft 35.

The third embodiment may be modified such that the relative rotation limiting portion 154 of the first member 15 does not have the subplate 155 and such that the relative rotation limiting portion 164 of the second member 16 does not have the subplate 165. In this case, referring to FIG. 9, each of the first member 15 and the second member 16 has a substantially L-shape when viewed from the second side in the axial direction.

When the relative rotation limiting portions 154 and 164 do not have the subplates 155 and 165 respectively, the inner surface 111a of the plate 111 of the first member 15 is in contact with the inner surface 121a of the plate 121 of the second member 16. The plate connecting portion 156 of the relative rotation limiting portion 154 of the first member 15 is in contact with a side surface of the plate 121 of the second member 16 that is perpendicular to the width direction. A plate connecting portion 166 of the relative rotation limiting portion 164 of the second member 16 is in contact with a side surface of the plate 111 of the first member 15 that is perpendicular to the width direction.

In this case, the plate connecting portion 156 of the relative rotation limiting portion 154 of the first member 15 limits rotation of the second member 16 relative to the first member 15. The plate connecting portion 166 of the relative rotation limiting portion 164 of the second member 16 limits rotation of the first member 15 relative to the second member 16. Thus, the rotational rigidity of the intermediate shaft 3B is improved.

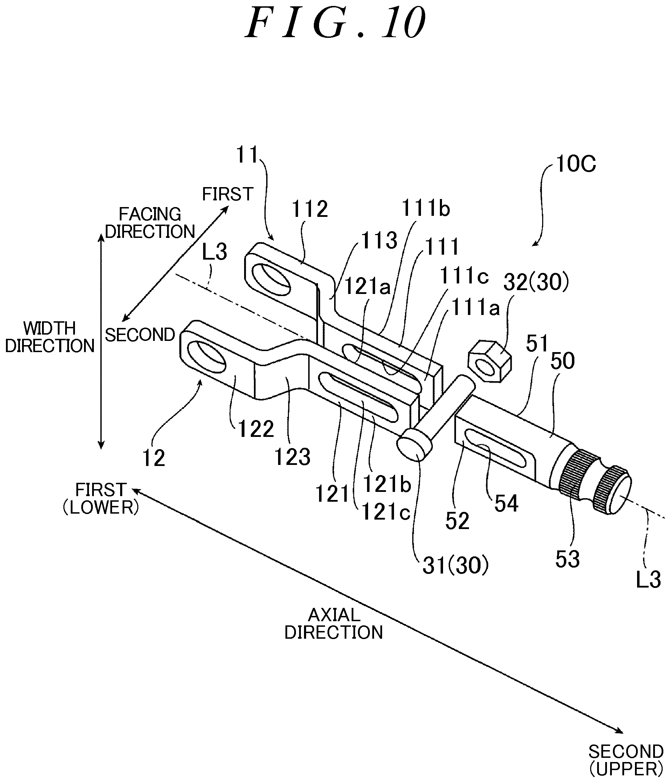

Although the intermediate shaft 3 according to the first embodiment includes the first member 11, the second member 12, the third member 21, and the fourth member 22, this is merely illustrative. For example, the third member 21 and the fourth member 22 may be eliminated from the intermediate shaft 3. FIG. 10 is a perspective view of a lower shaft portion 10C of an intermediate shaft according to a first modification of the first embodiment.

Referring to FIG. 10, the lower shaft portion 10C is a lower shaft of the intermediate shaft and includes a first member 11, a second member 12, a coupling shaft 50, a bolt 31, and a nut 32.

The coupling shaft 50 is a rodlike member and extends in the axial direction. The coupling shaft 50 has contact surfaces 51 and 52. The contact surfaces 51 and 52 extend in the axial direction and are flat surfaces perpendicular to the facing direction. The contact surfaces 51 and 52 are located at a first end of the coupling shaft 50 in the axial direction. The contact surface 51 is part of an outer circumferential surface of the coupling shaft 50 and forms a first surface in the facing direction. The contact surface 52 is part of the outer circumferential surface of the coupling shaft 50 and forms a second surface in the facing direction.

The coupling shaft 50 further has a serration portion 53. The serration portion 53 is a male serration formed in a second end of the coupling shaft 50 in the axial direction. Alternatively, the serration portion 53 may be a female serration formed in the second end of the coupling shaft 50 in the axial direction.

The coupling shaft 50 further has a through hole 54. The through hole 54 is a hole elongated in the axial direction and penetrates the first end of the coupling shaft 50 in the facing direction. Thus, the through hole 54 extends through the coupling shaft 50 from the contact surface 51 to the contact surface 52.

The positional relationships among the first member 11, the second member 12, and the coupling shaft 50 in the lower shaft portion 10C is described below.

An inner surface 111a of a plate 111 of the first member 11 is in contact with the contact surface 51 of the coupling shaft 50. An inner surface 121a of a plate 121 of the second member 12 is in contact with the contact surface 52 of the coupling shaft 50. In this condition, a coupling hole 111c in the plate 111 of the first member 11, a coupling hole 121c in the plate 121 of the second member 12, and the through hole 54 in the coupling shaft 50 coincide with each other in the facing direction. As such, the coupling hole 111c in the plate 111 of the first member 11, the coupling hole 121c in the plate 121 of the second member 12, and the through hole 54 in the coupling shaft 50 are connected together in the facing direction to form a single continuous hole.

From the second side in the facing direction, the bolt 31 of the coupling member 30 is inserted into the hole that is formed by the coupling hole 111c in the plate 111 of the first member 11, the coupling hole 121c in the plate 121 of the second member 12, and the through hole 54 in the coupling shaft 50. The nut 32 is threaded onto a portion of the bolt 31 that protrudes from the plate 111 of the first member 11, thereby forming the lower shaft portion 10C.

According to the first modification, since the first member 11 and the second member 12 of the lower shaft portion 10C are identical in shape, the number of parts of the intermediate shaft is reduced. The coupling shaft 50 may be an upper shaft of the intermediate shaft or may be coupled to a member of the upper shaft.

It is not essential that the through hole 54 in the coupling shaft 50 coincides with the coupling holes 111c and 121c in the facing direction. As long as the through hole 54 is connected to the coupling holes 111c and 121c in the facing direction so as to form a single continuous hole, the through hole 54 may be displaced from the coupling holes 111c and 121c in the axial direction. This allows the intermediate shaft to have an adjustable length in the axial direction.

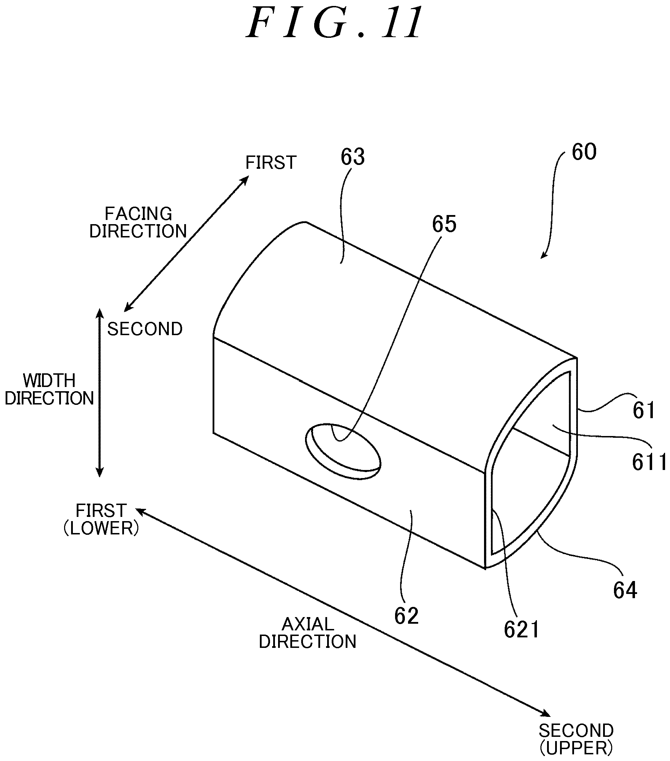

The lower shaft portion 10C according to the first modification illustrated in FIG. 10 may use a reinforcing member 60 illustrated in FIG. 11. Referring to FIG. 11, the reinforcing member 60 has a tubular shape extending in the axial direction and includes flat portions 61 and 62 and curved portions 63 and 64. Each of the flat portions 61 and 62 has a plate shape and is perpendicular to the facing direction. The flat portion 61 is located on the first side in the facing direction. The flat portion 62 is located on the second side in the facing direction. The curved portion 63 connects together first ends of the flat portions 61 and 62 in the width direction and is curved outward in the width direction. The curved portion 64 connects together second ends of the flat portions 61 and 62 in the width direction and is curved outward in the width direction.

Each of the flat portions 61 and 62 has a through hole 65. Each of the circular through holes 65 penetrates a corresponding one of the flat portions 61 and 62 in the facing direction and has an inner circumferential surface provided with an internal thread. A shank of the bolt 31 is inserted through the through holes 65. In FIG. 11, the through hole 65 in the flat portion 61 is hidden by the curved portion 63 and thus is not visible.

Referring to FIG. 10, the reinforcing member 60 is fitted onto the plate 111 of the first member 11 and the plate 121 of the second member 12 with the coupling shaft 50 sandwiched between the first member 11 and the second member 12 in the facing direction. Thus, an inner surface 611 of the flat portion 61 of the reinforcing member 60 is in contact with the outer surface 111b of the plate 111 of the first member 11. An inner surface 621 of the flat portion 62 of the reinforcing member 60 is in contact with the outer surface 121b of the plate 121 of the second member 12. In this condition, the shank of the bolt 31 is inserted through the coupling holes 111c and 121c and the through holes 54 and 65.

This prevents rotation of the first member 11 relative to the second member 12 and the coupling shaft 50, and prevents rotation of the second member 12 relative to the first member 11 and the coupling shaft 50. Thus, the rotational rigidity of the lower shaft portion 10C is improved.

Although the first member 11, the second member 12, the third member 21, and the fourth member 22 according to the embodiments described above are all identical in shape, this is merely illustrative. The first member 11 and the third member 21 may differ from each other in shape. In this case, the first member 11 and the second member 12 are identical in shape while the third member 21 and the fourth member 22 are identical in shape.

For example, the length of the plate 111 of the first member 11 in the axial direction may differ from the length of the plate 211 of the third member 21 in the axial direction. As another example, the distance between the plate 111 and the arm portion 112 of the first member 11 in the facing direction may differ from the distance between the plate 211 and the arm portion 212 of the third member 21 in the facing direction.

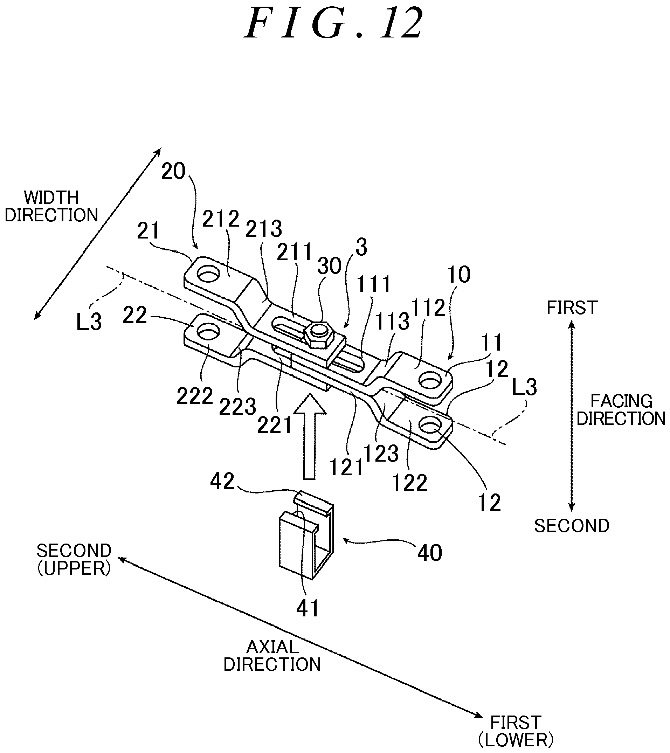

The intermediate shaft 3 illustrated in FIG. 2 may have a reinforcing member 40 illustrated in FIG. 12. The reinforcing member 40 is a frame and has a rectangular shape when viewed in the axial direction. The reinforcing member 40 has a cutout 41. The cutout 41 is formed in a platelike portion 42 of the reinforcing member 40 and penetrates the platelike portion 42 in the facing direction. The platelike portion 42 forms a first surface of the reinforcing member 40 in the facing direction.

The reinforcing member 40 is fitted onto overlapping portions of the plates 111, 121, 211, and 221 of the intermediate shaft 3 that overlap each other in the facing direction. Thus, the overlapping portions of the plates 111, 121, 211, and 221 of the intermediate shaft 3 in the facing direction are clamped together by the reinforcing member 40 from both sides, both in the facing direction and in the width direction. This improves the rotational rigidity of the intermediate shaft 3.

Although the coupling member 30 according to the embodiments described above includes the bolt 31 and the nut 32, this is merely illustrative. The coupling member 30 can be any member that is fixed to the third member and the fourth member after inserted through a hole that penetrates portions of the first member, the second member, the third member, and the fourth member that overlap each other in the facing direction.

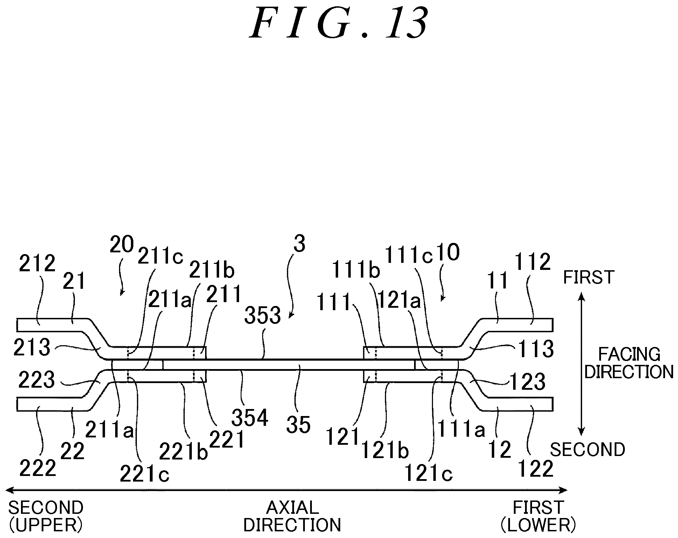

The intermediate shaft 3 illustrated in FIG. 2 may use a coupling shaft 35 to couple the lower shaft portion 10 and the upper shaft portion 20 as illustrated in FIG. 13. When the intermediate shaft 3 is viewed in the facing direction, the first member 11 and the second member 12 overlap neither the third member 21 nor the fourth member 22.

Referring to FIG. 13, in the lower shaft portion 10, the inner surface 111a of the plate 111 of the first member 11 is in contact with a surface 353 of the coupling shaft 35 at a first end of the coupling shaft 35 in the axial direction. The surface 353 of the coupling shaft 35 is a first surface of the coupling shaft 35 in the facing direction. The inner surface 121 a of the plate 121 of the second member 12 is in contact with a surface 354 of the coupling shaft 35 at the first end of the coupling shaft 35 in the axial direction. The surface 354 of the coupling shaft 35 is a second surface of the coupling shaft 35 in the facing direction.

In the upper shaft portion 20, the inner surface 211 a of the plate 211 of the third member 21 is in contact with the surface 353 at a second end of the coupling shaft 35 in the axial direction. The inner surface 221 a of the plate 221 of the fourth member 22 is in contact with the surface 354 at the second end of the coupling shaft 35 in the axial direction.

Coupling the lower shaft portion 10 and the upper shaft portion 20 together by using the coupling shaft 35 as illustrated in FIG. 13 allows the intermediate shaft 3 to increase length in the axial direction.

According to the embodiments, the first member and the second member form the lower shaft portion of the intermediate shaft while the third member and the fourth member form the upper shaft portion of the intermediate shaft. Alternatively, the first member and the second member may form the upper shaft portion of the intermediate shaft while the third member and the fourth member may form the lower shaft portion of the intermediate shaft.

Although the embodiments describe the intermediate shaft that embodies the invention, this is merely illustrative. The structures of the intermediate shaft, the lower shaft portion, and the upper shaft portion may be applied to shafts other than intermediate shafts.

The invention has been described with reference to preferred embodiments for illustrative purposes only. The invention is not limited to the embodiments, and various modifications are possible within the scope of the invention.

The present disclosure makes it possible to reduce the number of parts of a shaft portion that provides one axial end of a shaft, thus reducing the manufacturing cost of the shaft.

## Claims

1. A shaft having a central axis of rotation and having opposite first and second ends in an axial direction that the central axis extends in, the shaft comprising:
first and second members that are identical in shape and that form a first shaft portion for providing the first end of the shaft, wherein
the first member includes a first plate, a first arm portion, and a first connecting portion,
the first plate extends in the axial direction,
the first arm portion is located closer to the first end of the shaft than the first plate, extends in the axial direction, and is located farther from the central axis than the first plate,
the first connecting portion connects the first plate and the first arm portion,
the second member includes a second plate, a second arm portion, and a second connecting portion,
the second plate extends in the axial direction,
the second arm portion is located closer to the first end of the shaft than the second plate, extends in the axial direction, and is located farther from the central axis than the second plate,
the second connecting portion connects the second plate and the second arm portion,
the first plate and the second plate face each other across the central axis, and
the first arm portion and the second arm portion are couplable with a first joint spider.

2. The shaft according to claim 1, further comprising:
third and fourth members that are identical in shape and that form a second shaft portion for providing the second end of the shaft, wherein
the third member includes a third plate, a third arm portion, and a third connecting portion,
the third plate extends in the axial direction,
the third arm portion is located closer to the second end of the shaft than the third plate, extends in the axial direction, and is located farther from the central axis than the third plate,
the third connecting portion connects the third plate and the third arm portion,
the fourth member includes a fourth plate, a fourth arm portion, and a fourth connecting portion,
the fourth plate extends in the axial direction,
the fourth arm portion is located closer to the second end of the shaft than the fourth plate, extends in the axial direction, and is located farther from the central axis than the fourth plate,
the fourth connecting portion connects the fourth plate and the fourth arm portion,
the third plate and the fourth plate face each other across the central axis, and
the third arm portion and the fourth arm portion are couplable with a second joint spider.

3. The shaft according to claim 2, wherein
the first arm portion of the first member is identical in shape to the third arm portion of the third member, and
the first connecting portion of the first member is identical in shape to the third connecting portion of the third member.

4. The shaft according to claim 2 or 3, wherein
each of the first plate and the second plate overlaps the third plate and the fourth plate in a first facing direction that the first plate and the second plate face each other in.

5. The shaft according to claim 1, further comprising:
a coupling shaft extending in the axial direction, the coupling shaft overlapping and sandwiched between the first plate and the second plate in a facing direction that the first plate and the second plate face each other in.

6. The shaft according to claim 5, wherein
the coupling shaft has opposite first and second ends in the axial direction,
the first end of the coupling shaft has a flat plate shape and is sandwiched between the first plate and the second plate,
the second end of the coupling shaft has a flat plate shape and is couplable with a member of a second shaft portion for providing the second end of the shaft, and
the first and second ends of the coupling shaft are angled relative to each other when viewed in the axial direction.

7. The shaft according to claim 4, wherein
the first plate has a first inner surface and a first outer surface,
the first inner surface faces the second plate,
the first outer surface is located opposite the first inner surface of the first plate in a second facing direction that the first arm portion and the second arm portion face each other in,
the second plate has a second inner surface and a second outer surface,
the second inner surface faces the first plate and is in contact with the first outer surface,
the second outer surface is located opposite the second inner surface of the second plate in the second facing direction,
the third plate has a third inner surface that faces the fourth plate and that is in contact with the first outer surface,
the fourth plate has a fourth inner surface that faces the third plate and that is in contact with the second outer surface, and
the first outer surface, the second outer surface, the third inner surface, and the fourth inner surface are curved in an arc.

8. The shaft according to claim 4 or 7, further comprising:
a coupling member that couples together the first member, the second member, the third member, and the fourth member, wherein
the first plate has a first through hole extending through the first plate in the first facing direction,
the second plate has a second through hole extending through the second plate in the first facing direction,
the third plate has a third through hole extending through the third plate in the first facing direction,
the fourth plate has a fourth through hole extending through the fourth plate in the first facing direction,
the first through hole, the second through hole, the third through hole, and the fourth through hole are all at least partially connected together to form a single continuous hole extending in the first facing direction, and
the coupling member is inserted through the continuous hole and is fixed to the third plate and the fourth plate.
